(19) Europäisches Patentamt
European Patent Office
Office européen des brevets

(11) **EP 3 659 720 B1**

(12) **EUROPEAN PATENT SPECIFICATION**

(45) Date of publication and mention
of the grant of the patent:
**22.06.2022 Bulletin 2022/25**

(51) International Patent Classification (IPC):
**B07C 5/36** *(2006.01)*    **B07C 5/342** *(2006.01)*

(21) Application number: **19206085.3**

(52) Cooperative Patent Classification (CPC):
**B07C 5/368; B07C 5/3425;** B07C 2501/0018

(22) Date of filing: **30.10.2019**

(54) **SORTING APPARATUS**

SORTIERVORRICHTUNG

APPAREIL DE TRI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2018 JP 2018220863**

(43) Date of publication of application:
**03.06.2020 Bulletin 2020/23**

(73) Proprietor: **Panasonic Intellectual Property
Management Co., Ltd.
Osaka-shi, Osaka 540-6207 (JP)**

(72) Inventors:
• **MIYAJI, Naoya**
  **Osaka 540-6207 (JP)**
• **HAMADA, Shingo**
  **Osaka 540-6207 (JP)**

(74) Representative: **Vigand, Philippe et al
Novagraaf International SA
Chemin de l'Echo 3
1213 Onex - Genève (CH)**

(56) References cited:
**EP-A1- 2 808 096    EP-A2- 2 418 020**

## Description

1. Technical Field

The present disclosure relates to a sorting apparatus that sorts small pieces made of a specific material type from a sorting target in which a plurality of small pieces are recovered, and particularly, to a sorting apparatus that sorts small pieces made of a specific resin type from a sorting target obtained by crushing used home appliances and the like. A sorting apparatus reflecting the preamble of present claim 1 is disclosed by the document EP 2 418 020.

2. Description of the Related Art

Recent economic activities such as mass production, mass consumption, and mass disposal have caused global environmental problems such as global warming and resource depletion. Under such circumstances, recycling of home appliances has attracted attention for establishment of a recycling society, and recycling of used air conditioners, televisions, refrigerators/freezers, and washing machines is obligatory.

In the past, home appliances that are no longer needed are crushed into small pieces at a home appliance recycling factory, and the small pieces are separated and recycled according to each material type using magnetism, wind power, vibration or the like. In particular, small pieces made of metal are sorted with high purity according to each material type such as iron, copper and aluminum by using a specific gravity sorting apparatus, a magnetic sorting device or the like. Thus, a high recycling rate has been realized.

A sorting method for recycling a resin material is proposed in Japanese Patent No. 6283958.

FIG. 6 is a schematic view of a conventional sorting apparatus according to Japanese Patent No. 6283958. This sorting apparatus is a sorting apparatus that sorts a specific material object and the other material type object from a sorting target in which the specific material object and the other material object other than the specific material object coexist.

Resin piece 102 that has reached conveyor tip end portion 104 of conveyor 101 in a transport direction horizontally jumps out at the same speed V0 as a transport speed of conveyor 101.

Conveyor 101 transports resin piece 102 to be sorted placed on conveyor 101 in one direction. When resin piece 102 passes through a lower portion of identification unit 103, the sorting apparatus obtains position information on conveyor 101 simultaneously while identifying a composition of resin piece 102.

First assist nozzle 106 as an example of a first air blower unit that generates first air flow 109 is disposed above conveyor tip end portion 104. Flight path T of resin piece 102 that is gradually curved downward is formed along a blowing direction of a blowing port of first assist nozzle 106 from conveyor tip end portion 104 of conveyor 101.

Plurality of flat first upper rectifying plates 107A extending from a tip end portion of first assist nozzle 106 toward a downstream side of flight path T are arranged along flight path T above flight path T of resin piece 102 to be adjacent to each other.

Flat lower rectifying plate 107B is disposed along flight path T below flight path T of resin piece 102 and obliquely below conveyor tip end portion 104.

A plurality of nozzles of first nozzle group 105A as an example of an upstream injection unit of which a blowing port is directed to flight path T are arranged between plurality of adjacent first upper rectifying plates 107A. A plurality of nozzles of second nozzle group 105B as an example of an intermediate injection unit of which a blowing port is directed to flight path T are arranged at a downstream side end portion of first upper rectifying plate 107A on a downstream side among plurality of first upper rectifying plates 107A.

Flat second upper rectifying plate 107C is arranged along flight path T further at a downstream of the nozzles of second nozzle group 105B. A plurality of nozzles of third nozzle group 105C as an example of a downstream injection unit of which a blowing port is directed to flight path T are arranged at a downstream side end portion of second upper rectifying plate 107C.

Three partition plates 108 having different heights are arranged below flight path T. Four first to fourth sections 120A, 120B, 120C, and 120D are provided by three partition plates 108. Resin piece 102 jumping out from conveyor 101 along flight path T is recovered to one of first to fourth sections 120A, 120B, 120C, and 120D according to types by controlling first to third nozzle groups 105A to 105C.

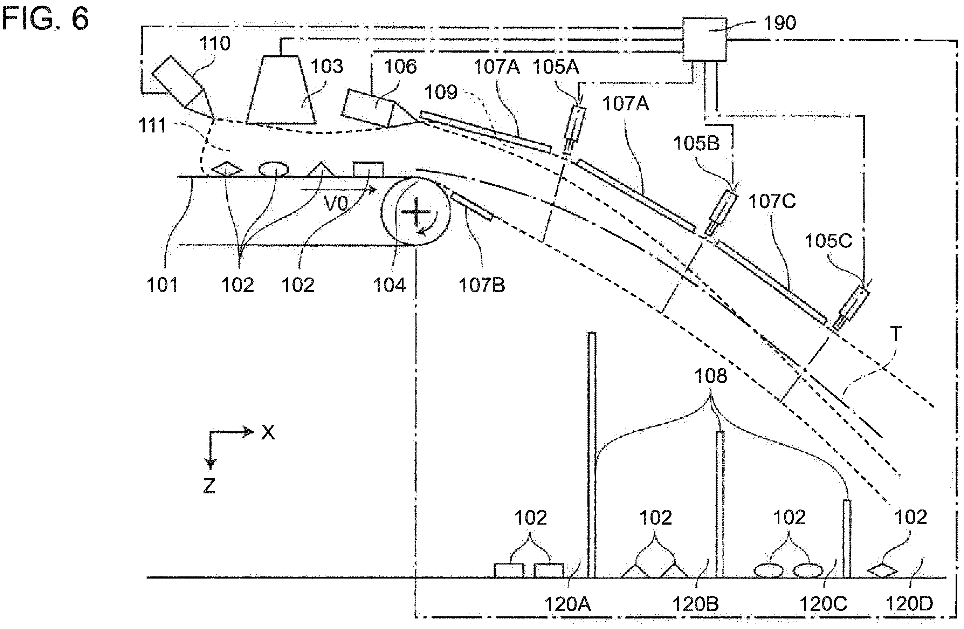

Further, in FIG. 6, second assist nozzle 110 as an example of a second air blower unit is disposed at a position behind first assist nozzle 106 and is configured to supply second air flow 111 from a blowing port of second assist nozzle 110 toward the surface of conveyor 101 at the same wind speed as conveyor transport speed V0. First air flow 109 and second air flow 111 function as an example of an air flow for forming flight path T.

First assist nozzle 106 above conveyor tip end portion 104 is disposed such that a nozzle tip end of first assist nozzle 106 is located near the surface of first upper rectifying plate 107A on an upstream side. According to such arrangement, due to the Coanda effect, first air flow 109 supplied from first assist nozzle 106 flows along the surface of first upper rectifying plate 107A immediately after being blown out and is gradually diffused as first air flow 109 flows downstream.

On the other hand, second air flow 111 supplied from second assist nozzle 110 flows on the surface of conveyor 101 in the transport direction of conveyor 101 at the same wind speed as conveyor transport speed V0, is blown out from conveyor tip end portion 104 toward flight path T of resin piece 102, and is gradually diffused as second air flow 111 flows downstream.

Therefore, wind speed distribution of combined air flow of first air flow 109 and second air flow 111 in the Z axis direction with respect to position x in the X axis direction including flight path T is wind speed distribution of combined air flow formed by combining first air flow 109 supplied from first assist nozzle 106 in conveyor tip end portion 104 and second air flow 111 supplied from second assist nozzle 110 in conveyor tip end portion 104.

Second air flow 111 is supplied from second assist nozzle 110 such that second air flow 111 has the same wind speed as conveyor transport speed V0 in conveyor tip end portion 104. In this case, resin piece 102 jumping out from conveyor tip end portion 104 does not receive substantially air resistance at a relative speed of zero immediately after jumping out. In addition to that, by supplying first air flow 109 having a wind speed larger than that of second air flow 111 at conveyor tip end portion 104 from first assist nozzle 106 to the vicinity of the surface of first upper rectifying plate 107A on an upstream side, due to the Coanda effect, first air flow 109 flows along the surface of first upper rectifying plate 107A on an upstream side. Therefore, first air flow 109 passes through the top of resin piece 102 immediately after jumping out and is gradually diffused downstream. The wind speed of the combined air flow along flight path T can increase by such wind speed distribution of the combined air flow obtained by combining first air flow 109 and second air flow 111. Accordingly, resin piece 102 does not receive substantially air resistance at a relative speed of zero at all positions of flight path T.

Accordingly, a variation in an actual flight path of resin piece 102 is reduced. Therefore, the corresponding specific material type resin among resin piece 102 can pass through a position where pulse air of the nozzles of third nozzle group 105C is received. Thus, at a moment at which the resin passes through a position where the pulse air of the nozzles of third nozzle group 105C is received, under a control of control device 190 based on information from identification unit 103, the pulse air can be injected from third nozzle group 105C, and only the corresponding specific material type resin can be knocked down from flight path T with high accuracy.

Further art is disclosed by the document EP 2 808 096 which discloses a separation apparatus that uses the centre of gravity to separate objects.

SUMMARY

Thus, the present invention concerns a sorting apparatus as defined in the appended claims.

BRIEF DESCRIPTION OF THE DRAWINGS

FIG. 1A is a schematic view of a sorting apparatus according to an exemplary embodiment of the present disclosure.

FIG. 1B is a block diagram of a controller of the sorting apparatus according to the exemplary embodiment of the present disclosure.

FIG. 2A is a schematic view of a resin piece placed on a conveyor.

FIG. 2B is a diagram illustrating setting of an injection area according to the exemplary embodiment of the present disclosure.

FIG. 2C is a schematic view of the resin piece placed on the conveyor.

FIG. 2D is a diagram illustrating setting of the injection area according to the exemplary embodiment of the present disclosure.

FIG. 2E is a diagram illustrating setting of the injection area and a non-injection area according to the exemplary embodiment of the present disclosure.

FIG. 2F is a diagram illustrating setting of the injection area and the non-injection area according to the exemplary embodiment of the present disclosure.

FIG. 2G is a diagram illustrating setting of the injection area and the non-injection area according to the exemplary embodiment of the present disclosure.

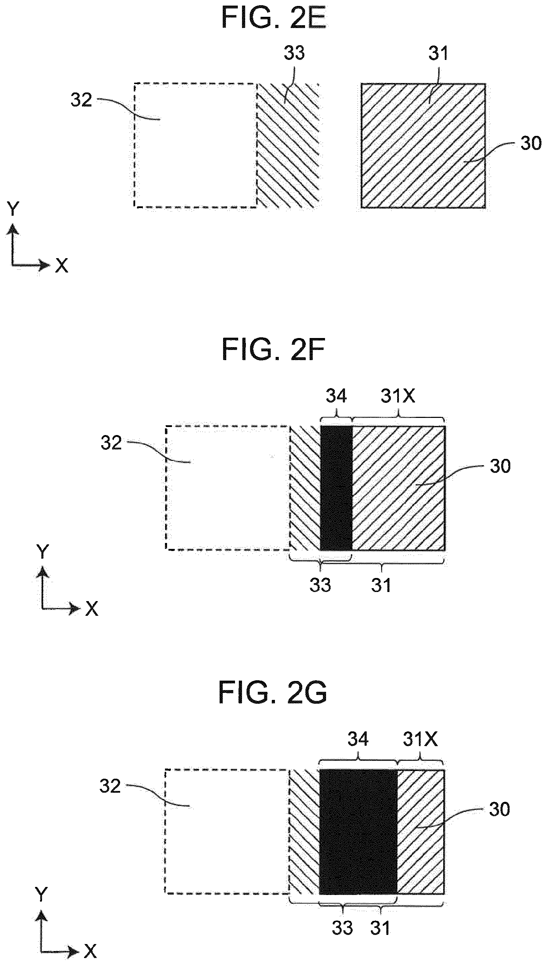

FIG. 2F is a diagram illustrating setting of the injection area and the non-injection area according to the exemplary embodiment of the present disclosure.

FIG. 2G is a diagram illustrating setting of the injection area and the non-injection area according to the exemplary embodiment of the present disclosure.

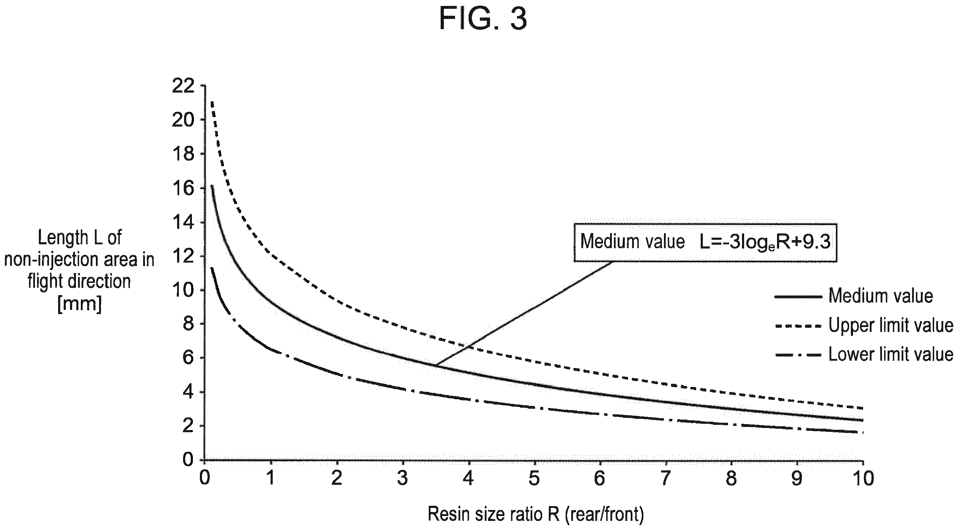

FIG. 3 is a graph depicting a relationship between the non-injection area and a size ratio of front and rear resins according to the exemplary embodiment of the present disclosure.

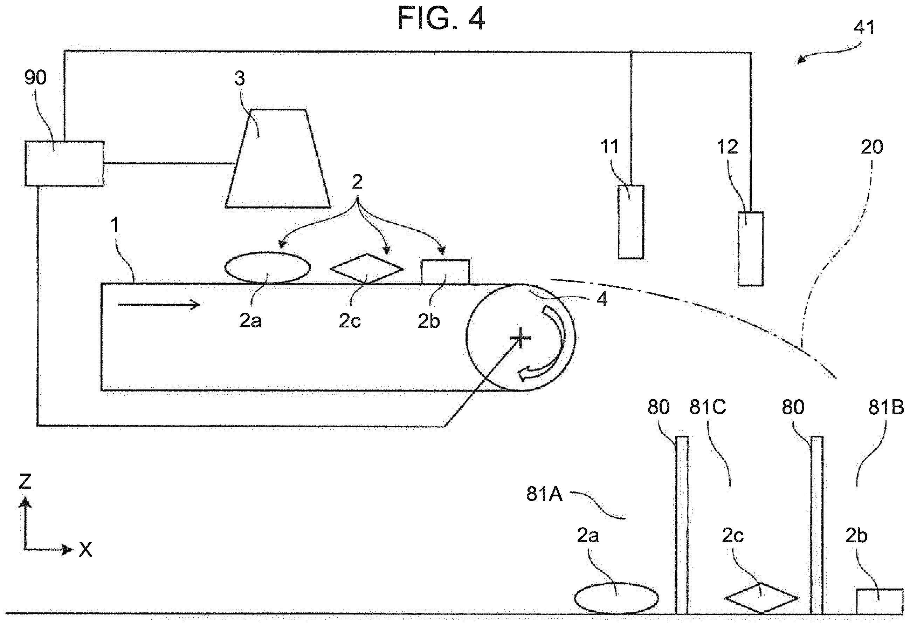

FIG. 4 is a schematic view of a sorting apparatus having two nozzle groups.

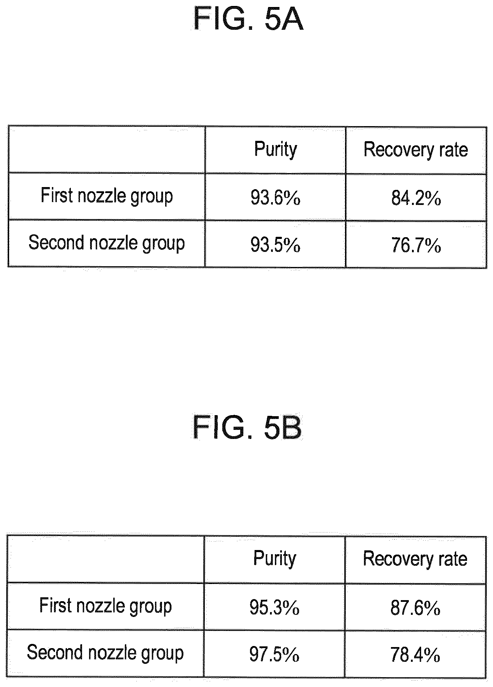

FIG. 5A is a table illustrating a purity and a recovery rate in an experiment not using the present disclosure.

FIG. 5B is a table illustrating a purity and a recovery rate in an experiment using the present disclosure.

FIG. 6 is a schematic view illustrating an apparatus of a conventional sorting apparatus described in Japanese Patent No. 6283958.

DETAILED DESCRIPTION

With the widespread use of a technology described in Japanese Patent No. 6283958, recycling of resin materials is progressing. In recent years, there has been a demand for recovery of resin crushed to a smaller size. When the resin is crushed to a small size, it is considered that a resin piece is supplied onto a conveyor in a dense state.

However, in a conventional configuration, when the resin piece is supplied onto the conveyor in a dense state, a distance between the resin pieces is small, and the resin piece is small and light. Thus, the resin piece not to be injected is affected by pulse air for sorting.

Therefore, there is a problem in that sorting accuracy deteriorates. In detail, a resin of a different resin type is mixed in a recovery portion in which a resin of a predetermined resin type is recovered, and thus the purity of a recovered material is lowered. Further, as the resin piece to be sorted by a second nozzle group is affected by pulse air injected from a first nozzle group and thus scatteredly flies, the resin piece cannot be sorted by the second nozzle group, and thus a recovery rate is reduced.

In order to solve the above-mentioned problems, an aspect of the present disclosure provides a sorting apparatus that can perform sorting without reducing the purity and the recovery rate of the recovered material even when small-sized resin pieces are supplied onto a conveyor in a dense state.

Hereinafter, an exemplary embodiment of the present disclosure will be described in detail with reference to the drawings.

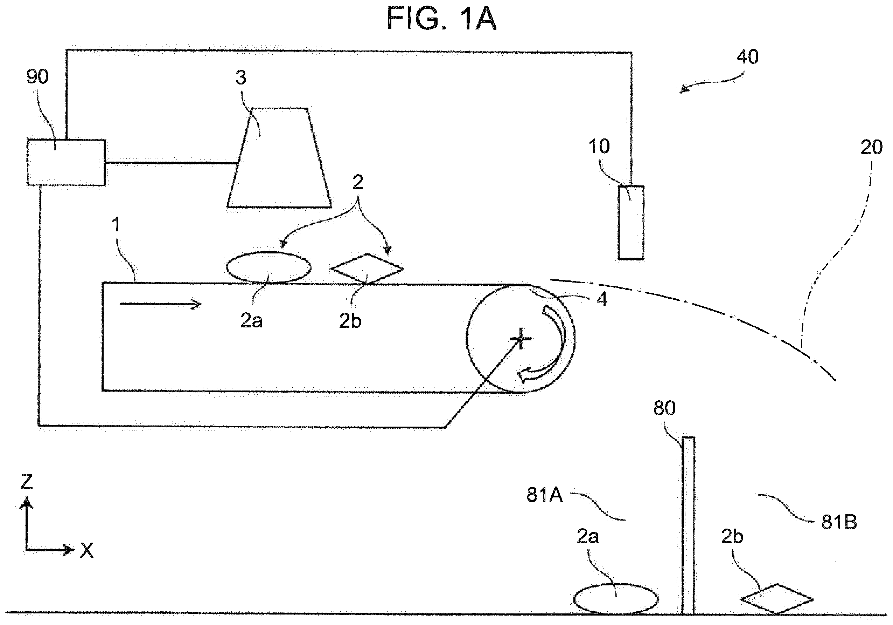

FIG. 1A is a schematic view of a sorting apparatus according to an exemplary embodiment. Sorting apparatus 40 includes a transport unit, identification unit 3, an injection unit, and controller 90.

An example of the transport unit is conveyor 1. An example of the injection unit is injection nozzle 10 such as an air nozzle. Injection nozzle 10 is actually configured with an injection nozzle group in which a plurality of nozzles are arranged. Basically, the injection nozzle group performs an injection operation or an injection stop operation at the same timing. Hereinafter, for simplicity, injection nozzle 10 will be described as a single injection nozzle.

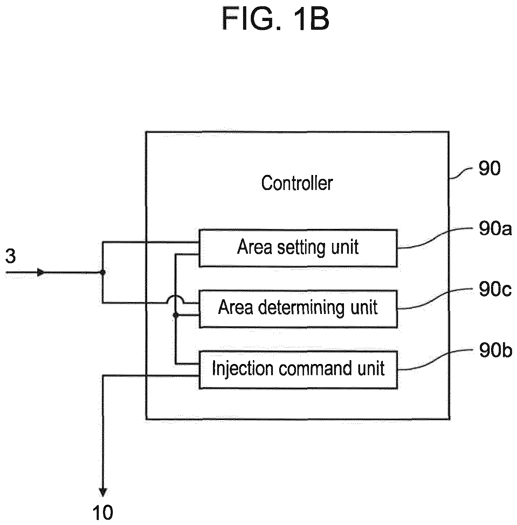

Sorting apparatus 40 illustrated in FIG. 1 includes one injection unit 10 and sorts resin piece 2 to be sorted into two types. However, the present disclosure is not limited thereto. For example, sorting apparatus 40 may include two or more injection units 10 and may sort resin piece 2 into three or more types.

Further, since a sorting target to be sorted by sorting apparatus 40 is mainly resin, in the present exemplary embodiment, an example where the sorting target is resin piece 2 is illustrated. However, the present disclosure is not limited thereto. For example, the sorting target may include a composite of a resin and another material (metal, glass, and the like).

In FIG. 1A, conveyor 1 transports resin piece 2 which is an example of the sorting target placed on conveyor 1 in one transport direction. Specific material type object 2a and other material type object 2b other than specific material type object 2a coexist in resin piece 2. Conveyor 1 transports resin piece 2 from one end of resin piece 2 on a charging side toward the other end (that is, conveyor tip end portion 4) of resin piece 2 on a flying side. Identification unit 3 is disposed above an intermediate portion of conveyor 1. When resin piece 2 passes through a lower side of identification unit 3 by the transport of conveyor 1, identification unit 3 identifies a composition of resin piece 2 and also generates position information indicating the position of resin piece 2 on conveyor 1.

Identification unit 3 identifies a composition of resin piece 2. For example, identification unit 3 is a device that identifies a material type of resin (plastic) from reflected light when irradiated with infrared light. The information identified by identification unit 3 is sent to controller 90. In addition, identification unit 3 also acquires existence area information of resin piece 2. In detail, identification unit 3 identifies the position (on the X-Y plane) of resin piece 2 on transport unit 1 and the size (on the X-Y plane) of resin piece 2. Based on information on an existence area of resin piece 2, it is possible to know the size on the X-Y plane, the area, the length in the transport direction, and the length in a width direction that is perpendicular to the transport direction and a vertical direction of resin piece 2.

Injection nozzle 10 is disposed above flight path 20 of resin piece 2 to be sorted along the transport direction along flight path 20 toward flight path 20. Injection nozzle 10 injects the pulse air onto specific material type object 2a flying from conveyor 1.

Controller 90 controls opening and closing of injection nozzle 10 based on the material type, the position, and the size of resin piece 2 identified by identification unit 3. As illustrated in FIG. 1B, controller 90 includes area setting unit 90a, injection command unit 90b, and area determining unit 90c.

Area setting unit 90a sets a setting injection area or a non-injection area for resin piece 2 based on the composition and the position information identified by identification unit 3. In detail, area setting unit 90a sets the setting injection area for specific material type object 2a, and sets the non-injection area for other material type object 2b.

Injection command unit 90b outputs, to injection nozzle 10, a command of injecting the pulse air to an injection area set by area determining unit 90c, and injects the pulse air from injection nozzle 10 to the injection area. Injection nozzle 10 drives or stops driving of the pulse air according to widely-known opening and closing control of an opening and closing valve.

Area determining unit 90c determines whether or not the setting injection area and the non-injection area overlap each other. When the setting injection area and the non-injection area overlap each other, area determining unit 90c sets the setting injection area other than the non-injection area as an injection area. In other words, a portion of the setting injection area where the setting injection area and the non-injection area do not overlap each other is set as the injection area. When the setting injection area and the non-injection area do not overlap each other, area determining unit 90c sets the setting injection area as the injection area.

Resin piece 2, which is transported by conveyor 1 and reaches conveyor tip end portion 4 of conveyor 1 in the transport direction, jumps out from conveyor tip end portion 4 in the transport direction, for example, the horizontal direction, at the same speed as the transport speed of conveyor 1.

Resin piece 2 thrown out from conveyor 1 in the horizontal direction falls freely. In that case, at a moment when specific material type object 2a, which is the corresponding specific material type resin, among resin piece 2, passes through a position where specific material type object 2a receives the pulse air from injection nozzle 10, the pulse air is injected from injection nozzle 10 according to a command from controller 90 based on the information from identification unit 3. By this injection, only corresponding specific material type object 2a is knocked down by the pulse air, and is recovered in section 81A partitioned by partition plate 80. Other material type object 2b, which are resins of the other material type object other than specific material type object 2a, are recovered in section 81B without the pulse air being injected and without being knocked down by the pulse air.

It is described to which range of resin piece 2 controller 90 outputs an injection command to injection nozzle 10 such that the pulse air is injected, based on the information obtained by identification unit 3, by area setting unit 90a, injection command unit 90b, and area determining unit 90c.

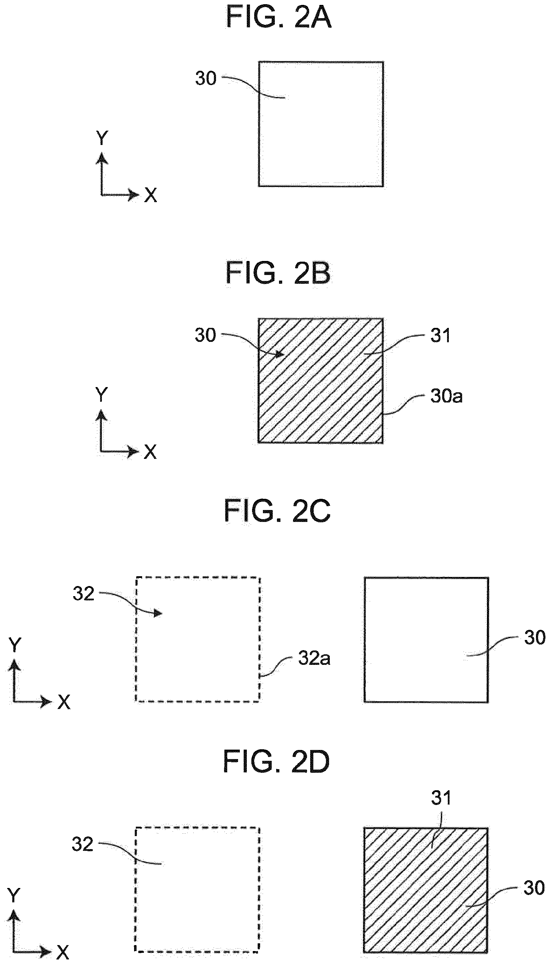

FIG. 2A is a view of resin piece 30 of the specific material type placed on conveyor 1 when identification unit 3 identifies rectangular resin piece 30 of the specific material type, as viewed downward from the upper side of conveyor 1. Here, the X axis of FIGS. 2A to 2G, which will be described below, is the transport direction of conveyor 1, which is like FIG. 1A. When identification unit 3 identifies that resin piece 30 is the specific material type, as an example, as illustrated in FIG. 2B, area setting unit 90a of controller 90 sets rectangular setting injection area 31 as indicated by oblique lines for the entire range of resin piece 30. For example, when resin piece 30 is rectangular, area setting unit 90a sets rectangular injection area 31 as indicated by oblique lines for the entire rectangular range. Here, area setting unit 90a specifies the size and the position of resin piece 30 (corresponding to the specific material type object 2a in FIG. 1) of the specific material type, based on the information obtained by identification unit 3. Here, area setting unit 90a specifies the size of resin piece 30 as the size of an area surrounded by solid line 30a. Area setting unit 90a sets setting injection area 31 as an area having the same size as resin piece 30 of the specific material type and as an oblique shaded area that is not surrounded by a line. Since there is no non-target resin piece on the rear side, area determining unit 90c determines that setting injection area 31 and non-injection area do not overlap each other. Therefore, area determining unit 90c sets setting injection area 31 set by area setting unit 90a as the injection area. Injection command unit 90b issues, to injection nozzle 10, a command for injecting the pulse air to the injection area set by area determining unit 90c.

In the present exemplary embodiment, area setting unit 90a sets, as the setting injection area, a range having the same size as the size of specific material type object 2a. However, the present disclosure is not limited thereto. For example, area setting unit 90a may set, as the setting injection area, a range that is larger or smaller than the size of specific material type object 2a.

Next, a case where resin piece 32 not to be injected (corresponding to other material type object 2b in FIG. 1) exists behind resin piece 30 will be described with reference to FIGS. 2C to 2G. FIG. 2C is a schematic view of a case where rectangular non-target resin piece 32 is located behind resin piece 30 of the specific material type on conveyor 1 (in other words, on the left side of FIG. 2C (in a negative direction of the X axis)). Here, area setting unit 90a specifics the size and the position of non-target resin piece 32 based on the information obtained by identification unit 3. The size of resin piece 32 on the X-Y plane is set as the size of an area surrounded by a broken line 32a.

First, as illustrated in FIG. 2D, area setting unit 90a sets setting injection area 31 of rectangular resin piece 30 to be sorted of the specific material type, which is like FIG. 2B.

Next, as illustrated in FIG. 2E, the pulse air injected to resin piece 30 of the specific material type is prevented from affecting non-target resin piece 32 transported behind resin piece 30 of the specific material type. Area setting unit 90a sets rectangular non-injection area 33 in front of non-target resin piece 32 (in other words, on the right side of FIG. 2E (in a positive direction of the X axis)). Here, non-injection area 33 is set as an oblique shaded area that is not surrounded by a line.

As described above, area setting unit 90a of controller 90 sets setting injection area 31 and non-injection area 33. Area determining unit 90c determines whether or not setting injection area 31 and non-injection area 33 set by area setting unit 90a overlap each other. In an example illustrated in FIG. 2E, area determining unit 90c determines that setting injection area 31 and non-injection area 33 do not overlap each other. Therefore, area determining unit 90c sets setting injection area 31 set by area setting unit 90a as the injection area. Injection command unit 90b issues, to injection nozzle 10, a command to inject the pulse air to the injection area set by area determining unit 90c.

Further, FIG. 2F illustrates an example where setting injection area 31 and non-injection area 33 overlap each other. As illustrated in FIG. 2F, similarly to the above description, area setting unit 90a sets setting injection area 31 and non-injection area 33, based on the upper side from identification unit 3. Here, area determining unit 90c determines that setting injection area 31 and non-injection area 33 set by area setting unit 90a overlap each other. Therefore, area determining unit 90c determines that interference area 34 (corresponding to a black area of FIG. 2F) where setting injection area 31 and non-injection area 33 overlap each other is an area that is not injected even in the setting injection area. That is, area determining unit 90c sets, as an injection area, area 31X obtained by removing interference area 34 from setting injection area 31.

When area setting unit 90a sets setting injection area 31 and non-injection area 33, in some cases, as illustrated in FIG. 2G, interference area 34 where setting injection area 31 and non-injection area 33 overlap each other may occupy most of the length of resin piece 30 of the specific material type in a flight direction. In this case, as described above, since interference area 34 is an area that is not injected, injection area 31X with respect to an area of resin piece 30 of the specific material type on the X-Y plane is narrowed. Therefore, there is a possibility that resin piece 30 of the specific material type cannot be knocked down with high accuracy.

Assuming such a case, based on the information in identification unit 3, the setting information in area setting unit 90a, and the determination information in area determining unit 90c, when the injection area set by area determining unit 90c is less than 50% of the area of resin piece 30 of the specific material type, injection command unit 90b can also perform injection control so as not to inject the pulse air even to resin piece 30 of the specific material type.

Further, the length of non-injection area 33 in the flight direction (the transport direction, the positive direction of the X axis) is determined by a ratio between the size of front and rear resin pieces 30 and the size of resin piece 32. When the size of front resin piece 30 of the specific material type is large, the injection area becomes wide, and the amount of the pulse air injected toward resin piece 30 of the specific material type increases. Therefore, influence on rear non-target resin piece 32 increases. Further, when the size of rear non-target resin piece 32 is large, the momentum of resin piece 32 itself is large, and thus it is difficult that resin piece 32 is affected by the pulse air that is injected toward resin piece 30 of the specific material type. Using this property, area setting unit 90a sets non-injection area 33 based on a ratio between the size of front and rear resin pieces 30 and the size of resin piece 32.

FIG. 3 is a graph depicting a relationship between the length of non-injection area 33 in the flight direction and the size ratio between front resin piece 30 and rear resin piece 32. FIG. 3 illustrates a result of an experiment using an actual sorting apparatus. The graph illustrated in FIG. 3 was made by changing a ratio R between the size of resin piece 30 and the size of resin piece 32 and length L of non-injection area 33 in the flight direction and by identifying a range that does not affect the sorting. In the graph illustrated in FIG. 3, a horizontal axis R denotes a (front/rear) resin size ratio and is a value obtained by dividing the length of rear non-target resin piece 32 in the flight direction by the length of front resin piece 30 of the specific material type in the flight direction. A vertical axis L denotes the length of non-injection area 33 in the flight direction. In FIG. 3, a medium value is derived by logarithmically approximating an experimental value. In an experiment using the actual sorting apparatus, a relationship between resin size ratio R and medium value L of the length of non-injection area 33 in the flight direction is as follows.

$$L = -3\log_e R + 9.3$$

Further, in experimental data, the length of non-injection area 33 in the flight direction has a value obtained by adding 30% to the medium value, as an upper limit value, and has a value obtained by subtracting 30% from the medium value, as a lower limit value. This is a range in which even while non-target resin piece 32 is affected by the pulse air injected to the resin piece of the specific material type, non-target resin piece 32 continues to fly without being knocked down. Accordingly, non-target resin piece 32 is not mixed in section 81A illustrated in FIG. 1A. As a result, the purity of resin piece 30 of the specific material type sorted and recovered in section 81A is improved.

Further, area setting unit 90a may set a value obtained by adding 15% to the medium value as an upper limit value and a value obtained by subtracting 15% from the medium value as a lower limit value, as the length of non-injection area 33 in the flight direction. In this case, non-target resin piece 32 is not affected by the pulse air injected to the resin piece of the specific material type. Thus, the purity of resin piece 30 of the specific material type can be improved, and an area where non-injection area 33 overlaps setting injection area 31 can be reduced. Therefore, a probability that the pulse air can surely knock down resin piece 30 of the specific material type increases, and a recovery rate of resin piece 30 of the specific material type sorted and recovered in section 81A is improved.

Area setting unit 90a of controller 90 firstly calculates an R that is the (rear/front) resin size ratio obtained by dividing the length of rear resin piece 32 in the flight direction measured by identification unit 3 by the length of front resin piece 30 in the flight direction. Then, area setting unit 90a calculates L that is the length of non-injection area 33 in the flight direction by substituting R into an equation of the medium value, based on the graph of FIG. 3

L that is the length of non-injection area 33 in the flight direction does not need to be calculated each time. Since there is no problem when L with respect to R belongs to the range from the lower limit value to the upper limit value of FIG. 3, area setting unit 90a may simply derive L using a conversion table with discrete values.

Further, in sorting apparatus 40 according to the exemplary embodiment of the present disclosure, generally, when the particle size of the resin piece is adjusted to some extent by pretreatment, sorting accuracy is improved. Therefore, area setting unit 90a may set non-injection area 33 substantially by setting a value of the (rear/front) resin size ratio R to 0.4 or more and 2.5 or less.

Further, in a crushing process which is a pre-process of a sorting process, a target value of a certain size is set and the resin is crushed into resin pieces. Therefore, in the crushing process, it is difficult to generate a resin piece having a small size or a large size that unintentionally departs from the target value. Therefore, with regard to the particle size of the resin piece, stochastically, the number of resin pieces having a size of the target value is the largest, and the number of resin pieces is gradually reduced as the sizes of the resin pieces become farther from the target value.

From the above, a probability that the (rear/front) resin size ratio is 1 is the highest. Therefore, in order to reduce a calculation load of controller 90 and increase the sorting processing amount of the apparatus, area setting unit 90a may use the value of L when R = 1 as a fixed value.

The length of the non-injection area in the width direction (the Y axis direction) is set as the length of other material type object 2b (resin piece 32) in the width direction.

As described above, when other material type object 2b exists within a predetermined distance behind specific material type object 2a, area determining unit 90c makes the injection area of specific material type object 2a smaller than the area of specific material type object 2a. In detail, area determining unit 90c makes the injection area of specific material type object 2a on a placement plane smaller than the area of specific material type object 2a on the placement plane. Here, the placement plane is the surface of conveyor 1, is a plane obtained by extending the surface on which resin piece 2 is placed, and is an X-Y plane.

In more detail, when other material type object 2b exists within a predetermined distance behind specific material type object 2a, area determining unit 90c sets, as the injection area, an area obtained by removing a rear portion from an area of specific material type object 2a on the placement plane.

Actually, using sorting apparatus 41 illustrated in FIG. 4, comparative verification experiments were performed with and without non-injection area control by controller 90. FIG. 4 is a schematic view of sorting apparatus 41 having first nozzle group 11 and second nozzle group 12.

A difference between the apparatus of FIG. 1A and the apparatus of FIG. 4 is that specific material type object 2a of a first specific material type is sorted using first nozzle group 11, specific material type object 2c of a second specific material type that is different from the first specific material type of first nozzle group 11 is knocked down using second nozzle group 12 and is recovered and sorted in section 81C. Other material type object 2b other than the specific material type object is not knocked down by first nozzle group 11 and second nozzle group 12 and is recovered in section 81B.

FIGS. 5A and 5B are views illustrating examples where the purity and the recovery rate are improved by experiments using sorting apparatus 41 according to the exemplary embodiment of the present disclosure. FIG. 5A illustrates an experimental result when the non-injection area is not controlled in the same sorting apparatus as sorting apparatus 41 according to the exemplary embodiment of the present disclosure. FIG. 5B illustrates an experimental result when the non-injection area is controlled in the same sorting apparatus as sorting apparatus 41 according to the exemplary embodiment of the present disclosure.

The purity (%) = (the weight of the resin pieces of the specific material type among the resin pieces recovered in the partitioned sections/the weight of the resin pieces recovered in the partitioned sections) × 100. The recovery rate (%) = (the weight of the resin pieces of the specific material type among the resin pieces recovered in the partitioned sections/the weight of the resin pieces of the specific material type contained in all the resin pieces before the sorting) × 100

As illustrated in FIGS. 5A and 5B, when a case where the non-injection area is controlled using sorting apparatus 41 according to the exemplary embodiment of the present disclosure and a case where the non-injection area is not controlled are compared with each other, both the first nozzle group and the second nozzle group result in the improved purity and the improved recovery rate by applying the present disclosure.

According to the exemplary embodiment, based on the identification information in identification unit 3, non-injection area 33 is provided at least in front of other material type object 2b other than the specific material type object on a rear extension line of specific material type object 2a in the transport direction, and injection nozzle 10 can be controlled to inject the pulse air from injection nozzle 10 to injection area 31 other than non-injection area 33. As a result, even when resin piece 2 is supplied onto conveyor 1 in a dense state, other material type object 2b that are not targeted for injection cannot be affected by the pulse air for sorting specific material type object 2a. Thus, even when resin piece 2 is small, it is possible to prevent the purity and the recovery rate of the recovered material from being reduced.

As described above, according to the sorting apparatus according to the aspect of the present disclosure, even when the resin pieces are supplied to the transport unit in a dense state, the resin piece not to be sorted cannot be affected by the pulse air for sorting. Thus, even when the resin piece has a small size, it is possible to prevent the purity and the recovery rate of the recovered material from being reduced. Accordingly, as compared to the related art, it is possible to recover a resin crushed to a smaller size, and it is possible to further promote the sorting and utilization of the resin.

## Claims

1. A sorting apparatus (40) that sorts a specific material type object (2a) and other material type object (2b) other than the specific material type object (2a) from a sorting target in which the specific material type object (2a) and the other material type object (2b) are mixed, the sorting apparatus (40) comprising:

   a transport unit (1) that transports the sorting target loaded on the transport unit in one transport direction and causes the sorting target to fly at a tip end portion of the transport unit (1);
   an identification unit (3) that is disposed above the transport unit (1) to identify a material type, a position, and a size of the sorting target;
   an injection unit (10) that injects pulse air toward the specific material type object (2a); and
   a controller (90) that sets an injection area (31) of the pulse air to be injected to the specific material type object (2a) based on the material type, the position, and the size identified by the identification unit (3) and controls the injection unit to inject the pulse air to the injection area (31), wherein the controller (90) sets, as the injection area (31), an area obtained by removing a rear portion from an area of the specific material type object (2a, 30) on a placement plane when the other material type object (2b, 32) exists within a predetermined distance from a rear side of the specific material type object (2a, 30),
   **characterized in that**
   the controller (90) sets a non-injection area (33) in front of the other material type object (2b, 32) on a rear extension line of the specific material type object (2a, 30), and sets, as the injection area, an area (31X) obtained by removing the non-injection area (33) from the area of the specific material type object (2a, 30) on the placement plane.

2. The sorting apparatus of Claim 1,

   wherein the controller (90) includes
   an area setting unit (90a) that sets the non-injection area, and
   an injection command unit (90b) that controls the injection unit to inject the pulse air to the injection area.

3. The sorting apparatus of Claim 2,

   wherein the controller (90) further includes an area determining unit (90c) that determines whether or not the area of the specific material type object (2a, 30) on the placement plane and the non-injection area (33) overlap each other, and

   the area determining unit (90c) sets, as the injection area, an area obtained by removing an overlapping area (34) from the area (31) of the specific material type object (2a, 30) on the placement plane when it is determined that the area of the specific material type object (2a, 30) on the placement plane and the non-injection area (33) overlap each other.

4. The sorting apparatus of any one of Claim 1 to 3, wherein the controller (90) sets a range of the non-injection area (33) according to a ratio between a size of the specific material type object (2a, 30) and a size of the other material type object (2b, 32), the specific material type object (2a, 30) being in front of the other material type object (2b, 32 in the one transport direction.

5. The sorting apparatus of Claim 4,
   wherein the controller (90) sets a medium value of a length L of the non-injection area (33) in the one transport direction using a logarithmic function for R that is a value obtained by dividing a length of the rear other material type object (2b, 32) in the one transport direction by a length of the front specific material type object (2a, 30) in the one transport direction, and sets the length L within a range in which an upper limit value of the length L is the medium value + 30% and a lower limit value of the length L is the medium value - 30%.

## Patentansprüche

1. Sortiervorrichtung (40), die ein Objekt (2a) eines spezifischen Materialtyps und ein Objekt (2b) eines anderen Materialtyps als das Objekt (2a) des spezifischen Materialtyps aus einem Sortierziel, in dem das Objekt (2a) des spezifischen Materialtyps und das Objekt (2b) des anderen Materialtyps gemischt sind, sortiert, wobei die Sortiervorrichtung (40) Folgendes umfasst:

   eine Transporteinheit (1), die das Sortierziel, das auf die Transporteinheit geladen ist, in eine Transportrichtung transportiert und das Sortierziel veranlasst, an einem Spitzenendabschnitt der Transporteinheit (1) zu fliegen;
   eine Identifikationseinheit (3), die über der Transporteinheit (1) angeordnet ist, zum Identifizieren eines Materialtyps, einer Position und einer Größe des Sortierziels;
   eine Injektionseinheit (10), die Luftimpulse zum Objekt (2a) des spezifischen Materialtyps injiziert; und
   eine Steuerung (90), die auf Basis des Materialtyps, der Position und der Größe, die durch die Identifikationseinheit (3) identifiziert werden, einen Injektionsbereich (31) der Luftimpulse, die zum Objekt (2a) des spezifischen Materialtyps zu injizieren sind, einstellt und die Injektionseinheit zum Injizieren der Luftimpulse in den Injektionsbereich (31) steuert,

wobei die Steuerung (90) einen Bereich, der durch Entfernen eines hinteren Abschnitts aus einem Bereich des Objekts (2a, 30) des spezifischen Materialtyps auf einer Platzierungsebene, wenn das Objekt (2b) des anderen Materialtyps in einem vorbestimmten Abstand von einer Rückseite des Objekts (2a, 30) des spezifischen Materialtyps vorhanden ist, erhalten wird, als den Injektionsbereich (31) einstellt, **dadurch gekennzeichnet, dass**

die Steuerung (90) einen Nichtinjektionsbereich (33) vor dem Objekt (2b, 32) des anderen Materialtyps auf einer hinteren Verlängerungslinie des Objekts (2a, 30) des spezifischen Materialtyps einstellt und einen Bereich (31X), der durch Entfernen des Nichtinjektionsbereichs (33) aus dem Bereich des Objekts (2a, 30) des spezifischen Materialtyps auf der Platzierungsebene erhalten wird, als den Injektionsbereich einstellt.

2. Sortiervorrichtung nach Anspruch 1,

wobei die Steuerung (90) Folgendes beinhaltet eine Bereichseinstelleinheit (90a), die den Nichtinjektionsbereich einstellt, und eine Injektionsbefehlseinheit (90b), die die Injektionseinheit zum Injizieren der Luftimpulse in den Injektionsbereich steuert.

3. Sortiervorrichtung nach Anspruch 2,

wobei die Steuerung (90) ferner eine Bereichsbestimmungseinheit (90c) beinhaltet, die bestimmt, ob der Bereich des Objekts (2a, 30) des spezifischen Materialtyps auf der Platzierungsebene und der Nichtinjektionsbereich (33) einander überlappen oder nicht, und

die Bereichsbestimmungseinheit (90c) stellt einen Bereich, der durch Entfernen eines Überlappungsbereichs (34) aus dem Bereich (31) des Objekts (2a, 30) des spezifischen Materialtyps auf der Platzierungsebene, wenn bestimmt wird, dass der Bereich des Objekts (2a, 30) des spezifischen Materialtyps auf der Platzierungsebene und der Nichtinjektionsbereich (33) einander überlappen, erhalten wird, als den Injektionsbereich ein.

4. Sortiervorrichtung nach einem der Ansprüche 1 bis 3,

wobei die Steuerung (90) eine Region des Nichtinjektionsbereichs (33) gemäß einem Verhältnis zwischen einer Größe des Objekts (2a, 30) des spezifischen Materialtyps und einer Größe des Objekts (2b, 32) des anderen Materialtyps einstellt, wobei sich das Objekt (2a, 30) des spezifischen Materialtyps in der einen Transportrichtung vor dem Objekt (2b, 32) des anderen Materialtyps befindet.

5. Sortiervorrichtung nach Anspruch 4, wobei die Steuerung (90) unter Verwendung einer Logarithmusfunktion für R, das ein Wert ist, der durch Teilen einer Länge des hinteren Objekts (2b, 32) des anderen Materialtyps in der einen Transportrichtung durch eine Länge des vorderen Objekts (2a, 30) des spezifischen Materialtyps in der einen Transportrichtung erhalten wird, einen Mittelwert einer Länge L des Nichtinjektionsbereichs (33) in der einen Transportrichtung einstellt und die Länge L in einer Region einstellt, in der ein oberer Grenzwert der Länge L der Mittelwert + 30 % ist und der untere Grenzwert der Länge L der Mittelwert - 30 % ist.

**Revendications**

1. Appareil de tri (40) qui trie un objet de type matériel spécifique (2a) et un autre objet de type matériel (2b) autre que l'objet de type matériel spécifique (2a) à partir d'une cible de tri dans laquelle l'objet de type matériel spécifique (2a) et l'autre objet de type matériel (2b) sont mélangés, l'appareil de tri (40) comprenant :

une unité de transport (1) qui transporte la cible de tri chargée sur l'unité de transport dans une direction de transport et amène la cible de tri à passer au niveau d'une partie d'extrémité de pointe de l'unité de transport (1) ;
une unité d'identification (3) qui est disposée au-dessus de l'unité de transport (1) pour identifier un type de matériau, une position et une position de la cible de tri ;
une unité d'injection (10) qui injecte de l'air pulsé vers l'objet de type matériel spécifique (2a) ; et
un dispositif de commande (90) qui définit une zone d'injection (31) de l'air pulsé à injecter dans l'objet de type matériel spécifique (2a) sur la base du type de matériau, de la position et de la taille identifiés par l'unité d'identification (3) et commande l'unité d'injection pour injecter l'air pulsé dans la zone d'injection (31),
dans lequel le dispositif de commande (90) définit, en tant que zone d'injection (31), une zone obtenue en retirant une partie arrière d'une zone de l'objet de type matériel spécifique (2a, 30) sur un plan de placement lorsque l'autre objet de type matériel (2b, 32) se trouve à une distance prédéterminée d'un côté arrière de l'objet de type matériel spécifique (2a, 30), **caractérisé en ce que**

le dispositif de commande (90) définit une zone de non-injection (33) devant l'autre objet de type matériel (2b, 32) sur une fine extension arrière de l'objet de type matériel spécifique (2a, 30), et définit, en tant que zone d'injection, une zone (31X) obtenue en retirant la zone de non-injection (33) de la zone de l'objet de type matériel spécifique (2a, 30) sur le plan de placement.

2. Appareil de tri selon la revendication 1,

dans lequel le dispositif de commande (90) comporte
une unité de définition de zone (90a) qui définit la zone de non-injection, et
une unité d'instruction d'injection (90b) qui commande l'unité d'injection pour injecter l'air pulsé dans la zone d'injection.

3. Appareil de tri selon la revendication 2,

dans lequel le dispositif de commande (90) comporte en outre une unité de détermination de zone (90c) qui détermine si la zone de l'objet de type matériel spécifique (2a, 30) sur le plan de placement et la zone de non-injection (33) se chevauchent ou non, et
l'unité de détermination de zone (90c) définit, en tant que zone d'injection, une zone obtenue en retirant une zone de chevauchement (34) de la zone (31) de l'objet de type matériel spécifique (2a, 30) sur le plan de placement lorsqu'il est déterminé que la zone de l'objet de type matériel spécifique (2a, 30) sur le plan de placement et la zone de non-injection (33) se chevauchent.

4. Appareil de tri selon l'une quelconque des revendications 1 à 3,
dans lequel le dispositif de commande (90) définit une plage de la zone de non-injection (33) selon un rapport entre une position de l'objet de type matériel spécifique (2a, 30) et une position de l'autre objet de type matériel (2b, 32), l'objet de type matériel spécifique (2a, 30) se trouvant devant l'autre objet de type matériel (2b, 32) dans la première direction de transport.

5. Appareil de tri selon la revendication 4,
dans lequel le dispositif de commande (90) définit une valeur moyenne d'une longueur L de la zone de non-injection (33) dans la première direction de transport en utilisant une fonction logarithmique pour R qui est une valeur obtenue en divisant une longueur de l'autre objet de type matériel (2b, 32) arrière dans la première direction de transport par une longueur de l'objet de type matériel spécifique (2a, 30) avant dans la première direction de transport, et définit la longueur L dans une plage dans laquelle une valeur limite supérieure de la longueur L est la valeur moyenne +30 %, et une valeur limite inférieure de la longueur L est la valeur moyenne -30 %.

# FIG. 1A

EP 3 659 720 B1

# FIG. 1B

# FIG. 2A

# FIG. 2B

# FIG. 2C

# FIG. 2D

## FIG. 2E

## FIG. 2F

## FIG. 2G

# FIG. 3

Length L of non-injection area in flight direction [mm]

Resin size ratio R (rear/front)

Medium value   $L = -3\log_e R + 9.3$

——— Medium value

------ Upper limit value

—·—· Lower limit value

EP 3 659 720 B1

FIG. 4

EP 3 659 720 B1

## FIG. 5A

| | Purity | Recovery rate |
|---|---|---|
| First nozzle group | 93.6% | 84.2% |
| Second nozzle group | 93.5% | 76.7% |

## FIG. 5B

| | Purity | Recovery rate |
|---|---|---|
| First nozzle group | 95.3% | 87.6% |
| Second nozzle group | 97.5% | 78.4% |

FIG. 6

EP 3 659 720 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2418020 A
- JP 6283958 B

- EP 2808096 A